(19) Europäisches Patentamt
European Patent Office
Office européen des brevets

(11) **EP 4 632 020 A1**

(12) **EUROPEAN PATENT APPLICATION**


(43) Date of publication:
**15.10.2025 Bulletin 2025/42**

(21) Application number: **25170027.4**

(22) Date of filing: **11.04.2025**

(51) International Patent Classification (IPC):
***C09D 11/101*** *(2014.01)* ***B33Y 70/00*** *(2020.01)*
***C09D 11/38*** *(2014.01)* ***C09D 11/033*** *(2014.01)*
***C09D 11/36*** *(2014.01)*

(52) Cooperative Patent Classification (CPC):
**C09D 11/101; B33Y 70/00; C09D 11/033; C09D 11/36; C09D 11/38**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.04.2024 US 202463633255 P**



(71) Applicant: **3D Systems, Incorporated**
**Rock Hill, SC 29730 (US)**

(72) Inventors:
- **XU, Pingyong**
  **Valencia, 91354 (US)**
- **MAI, Anna Kristen**
  **Rock Hill, 29730 (US)**
- **KEILSOHN, Monica**
  **San Diego, 92127 (US)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**


(54) **METHODS AND COMPOSITIONS FOR ADDITIVE MANUFACTURING HAVING HIGH WATER PERMEABILITY**


(57) Build materials and methods of 3D printing are described herein. In one aspect, a build material comprises an acrylate component, a photoinitiator component, and a porogen component, wherein the porogen component is water soluble. In some embodiments, the porogen component is present in the build material in an amount of 55-75 wt. %, based on the total weight of the build material.


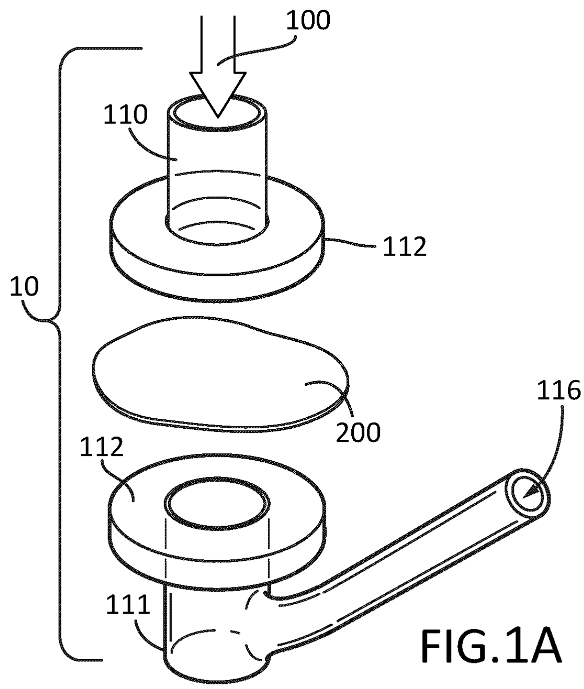

FIG.1A


EP 4 632 020 A1

## Description

CROSS REFERENCE TO RELATED APPLICATIONS

This application claims priority pursuant to 35 U.S.C. § 119 to U.S. Provisional Patent Application No. 63/633,255, filed April 12, 2024, which is hereby incorporated by reference in its entirety.

FIELD

The present invention relates generally to systems, methods, and compositions for use in three-dimensional (3D) printing or additive manufacturing.

BACKGROUND

Additive manufacturing systems or three-dimensional (3D) printers use build materials, which can also be referred to as inks or polymerizable liquids in some cases, to form various 3D objects, articles, or parts in accordance with computer generated files or other digital representations of the objects, articles, or parts. In some instances, the build material is solid at ambient temperatures and converts to liquid at elevated jetting temperatures. In other instances, the build material is liquid at ambient temperatures. Build materials can be formed into 3D objects in various manners, such as by jetting or otherwise depositing the build material onto a substrate. Build materials can also be selectively cured, solidified, or otherwise altered during a build. For example, some 3D printers form 3D articles from a reservoir, vat, or container of a fluid build material or a powdered build material. In some cases, a binder material or a laser, digital light processing (DLP) source, or other light source is used to selectively solidify or consolidate layers of the build material in a stepwise fashion to provide the 3D article.

Additive manufacturing or 3D printing systems can be used to form articles with various end uses. However, the end use of some articles formed by additive manufacturing can be limited by the build material used to form the article. For example, some articles formed by additive manufacturing cannot tolerate high temperatures, cannot be dissolved or dispersed or removed in a desired manner, and/or cannot provide sufficient mechanical strength for certain end uses. Biologically relevant applications can be particularly difficult to realize. Thus, there exists a need for improved compositions or build materials for 3D printing that have improved properties, particularly related to certain end uses that may require high strength and/or exposure to certain types of environmental conditions.

SUMMARY

In one aspect, build materials or compositions for use with a 3D printer are described herein. In some embodiments, a build material described herein comprises an acrylate component; a photoinitiator component; and a porogen component. In some such embodiments, the porogen component is water soluble. In some cases, the porogen component is present in the build material in an amount of 55-75 wt. %, based on the total weight of the build material.

Further, in some embodiments, the porogen component is miscible in water at 20°C. In some instances, the porogen component has a solubility between 20% and 100% in water at 20°C. In some cases, the porogen component has a solubility in water of at least 150 g/L at 20°C. Moreover, in other embodiments, the porogen component has a Hansen solubility parameter $\delta_d$ between 14 and 17 $(J/cm^3)^{1/2}$, a Hansen solubility parameter $\delta_p$ between 2 and 8 $(J/cm^3)^{1/2}$, and a Hansen solubility parameter $\delta_h$ between 10 and 15 $(J/cm^3)^{1/2}$. Further, in some embodiments, the surface tension of the porogen component is between 25 and 30 dynes/cm at 25°C, when measured according to ASTM D1331-20.

In some instances, the porogen component of a build material described herein comprises a glycol ether. In some such instances, the glycol ether comprises propylene glycol methyl ether or tripropylene glycol methyl ether.

In some embodiments, the acrylate component of a build material described herein comprises a urethane ether. In some such embodiments, the urethane acrylate comprises a polyether urethane acrylate. In other such embodiments, the urethane acrylate comprises a polyurethane acrylate. In some cases, the acrylate component is present in the build material in an amount of 20-40 wt. %, based on the total weight of the build material.

Additionally, in some cases, the photoinitiator component of a build material described herein is present in the build material in an amount of 0.5-2 wt. %, based on the total weight of the build material. In some embodiments, the photoinitiator component comprises a benzoylphosphine oxide. In some instances, a build material further comprises a colorant.

In another aspect, methods of forming a three-dimensional article by additive manufacturing are described herein. In some embodiments, such a method comprises providing a build material or composition described herein, and printing and curing the build material or composition to form a printed three-dimensional article. Additionally, in some cases, a build material or composition is provided in a layer-by-layer process. In some embodiments, the method further

comprises rinsing the printed three-dimensional article with an aqueous solution.

In another aspect, printed three-dimensional articles are described herein, including articles formed from a build material or composition described herein. In some cases, the printed three-dimensional article has a water permeability between $10^{-17}$ and $10^{-14}$ $m^2$ or between $10^{-16}$ and $10^{-14}$ $m^2$. In other embodiments, the article is a medical implant.

These and other embodiments are described in more detail in the detailed description which follows.

BRIEF DESCRIPTION OF THE DRAWINGS

Figure 1A illustrates an exploded perspective view of a schematic of a Franz cell, according to one embodiment described herein.

Figure 1B illustrates a non-exploded perspective view of the Franz cell of Figure 1A, when the cell is assembled.

Figure 2 illustrates a perspective view of a Franz cell set up for measuring the water permeability of an article printed using a composition and/or method described herein, using a Franz cell with 60 mm Hg pressure, according to one embodiment described herein.

Figure 3 illustrates a perspective view of a Franz cell set up for measuring the water permeability of an article printed using a composition and/or method described herein, using a Franz cell with 30 mm Hg pressure, according to one embodiment described herein.

DETAILED DESCRIPTION

Embodiments described herein can be understood more readily by reference to the following detailed description and examples. Elements, apparatus, and methods described herein, however, are not limited to the specific embodiments presented in the detailed description and examples. It should be recognized that these embodiments are merely illustrative of the principles of the present disclosure. Numerous modifications and adaptations will be readily apparent to those of skill in the art without departing from the spirit and scope of the disclosure.

In addition, all ranges disclosed herein are to be understood to encompass any and all subranges subsumed therein. For example, a stated range of "1.0 to 10.0" should be considered to include any and all subranges beginning with a minimum value of 1.0 or more and ending with a maximum value of 10.0 or less, e.g., 1.0 to 5.3, 1 to 4, 3 to 7, 4.7 to 10.0, 3.6 to 7.9, or 5 to 8.

All ranges disclosed herein are also to be considered to include the end points of the range, unless expressly stated otherwise. For example, a range of "between 5 and 10," "from 5 to 10," or "5-10" should generally be considered to include the end points 5 and 10.

Further, when the phrase "up to" is used in connection with an amount or quantity, it is to be understood that the amount is at least a detectable amount or quantity (that is, the amount is a non-zero amount). For example, a material present in an amount "up to" a specified amount can be present from a detectable (or non-zero) amount and up to and including the specified amount.

It is also to be understood that the article "a" or "an" refers to "at least one," unless the context of a particular use requires otherwise.

The terms "three-dimensional printing system," "three-dimensional printer," "printing," and the like generally describe various solid freeform fabrication techniques for making three-dimensional articles or objects by Stereolithography (SLA), digital light processing (DLP), selective deposition, jetting, fused deposition modeling (FDM), multi-jet modeling (MJM), and other additive manufacturing techniques now known in the art or that may be known in the future that use a build material to fabricate three-dimensional objects.

**I. Build Materials for 3D Printing**

In one aspect, build materials (or compositions) for use with a three-dimensional printer or additive manufacturing system are described herein. In some embodiments, a build material described herein comprises an acrylate component; a photoinitiator component; and a porogen component. In some such embodiments, the porogen is water soluble. In some cases, the porogen component is present in the build material in an amount of 55-75 wt. %, based on the total weight of the build material. Other components may also be present in some embodiments of build materials or compositions described herein.

Turning now in more detail to specific components of build materials or compositions described herein, a build material or composition described herein comprises a porogen component. In some embodiments, a porogen component described herein comprises a material that creates or generates pores in an article printed or formed from a build material described herein. For example, in some instances, and not intending to be bound by theory, a porogen component forms a

separate phase within a build material (including during an additive manufacturing process described herein), such as "bubbles" of porogen. Thus, in some such embodiments, the porogen component can be removed from the finished article (e.g., by rinsing in a manner described herein), leaving behind cavities, voids, or pores.

Moreover, in some embodiments, the porogen component of a build material described herein is water soluble. In other embodiments, the porogen component is miscible in water at 20°C. In some cases, the porogen component has a solubility between 20% and 100% in water at 20°C. In other instances, the porogen has a solubility between 20% and 90%, 20% and 80%, 20% and 70%, 20% and 60%, 20% and 50%, 20% and 40%, 20% and 30%, 30% and 100%, 30% and 90%, 30% and 80%, 30% and 70%, 30% and 60%, 30% and 50%, 30% and 40%, 40% and 100%, 40% and 90%, 40% and 80%, 40% and 70%, 40% and 60%, 40% and 50%, 50% and 100%, 50% and 90%, 50% and 80%, 50% and 70%, 50% and 60%, 60% and 100%, 60% and 90%, 60% and 80%, 60% and 70%, 70% and 100%, 70% and 90%, 70% and 80%, 80% and 100%, 80% and 90%, or 90% and 100% in water at 20°C. Additionally, in some embodiments, the porogen component has a solubility in water of at least 100 g/L, 125 g/L, 150 g/L, 175 g/L, or 200 g/L at 20°C.

Moreover, in some instances, the porogen component has a Hansen solubility parameter $\delta_d$ (the dispersion solubility parameter) between 14 and 17 $(J/cm^3)^{1/2}$. In some such cases, the porogen component has a Hansen solubility parameter $\delta_d$ between 14 and 15 $(J/cm^3)^{1/2}$ , between 16 and 17 $(J/cm^3)^{1/2}$, or between 15 and 16 $(J/cm^3)^{1/2}$. Additionally, in some embodiments, the porogen has a Hansen solubility parameter $\delta_p$ (the polar solubility parameter) between 2 and 8 $(J/cm^3)^{1/2}$. In some such implementations, the porogen has a Hansen solubility parameter $\delta_p$ between 2 and 6 $(J/cm^3)^{1/2}$, between 2 and 4 $(J/cm^3)^{1/2}$, between 4 and 8 $(J/cm^3)^{1/2}$, between 4 and 6 $(J/cm^3)^{1/2}$, or between 6 and 8 $(J/cm^3)^{1/2}$. Further, in some cases, the porogen has a Hansen solubility parameter $\delta_h$ (the hydrogen bonding solubility parameter) between 10 and 15 $(J/cm^3)^{1/2}$. In some such embodiments, the porogen has a Hansen solubility parameter $\delta_h$ between 10 and 14 $(J/cm^3)^{1/2}$, between 10 and 13 $(J/cm^3)^{1/2}$, between 10 and 12 $(J/cm^3)^{1/2}$, between 10 and 11 $(J/cm^3)^{1/2}$, between 11 and 15 $(J/cm^3)^{1/2}$, between 11 and 14 $(J/cm^3)^{1/2}$, between 11 and 13 $(J/cm^3)^{1/2}$, between 11 and 12 $(J/cm^3)^{1/2}$, between 12 and 15 $(J/cm^3)^{1/2}$, between 12 and 14 $(J/cm^3)^{1/2}$, between 12 and 13 $(J/cm^3)^{1/2}$, between 13 and 15 $(J/cm^3)^{1/2}$, between 13 and 14 $(J/cm^3)^{1/2}$, or between 14 and 15 $(J/cm^3)^{1/2}$.

In some embodiments, the surface tension of the porogen component is between 20 and 35 dynes/cm at 25°C, when measured according to ASTM D1331-20. In some cases, the surface tension of the porogen component is between 25 and 30 dynes/cm at 25°C, when measured according to ASTM D1331-20. Moreover, in other instances, the surface tension of the porogen component is between 20 and 25, 20 and 30, 25 and 35, or 30 and 35 dynes/cm at 25°C, when measured according to ASTM D1331-20.

Any porogen component not inconsistent with the technical objectives of the present disclosure may be used in a build material described herein. In some embodiments, a porogen component comprises a glycol ether. In some such embodiments, a glycol ether comprises propylene glycol methyl ether or tripropylene glycol methyl ether. Other chemical species may also be used as or in a porogen component described herein.

A porogen component can be present in a composition or build material described herein in any amount not inconsistent with the technical objectives of the present disclosure. In some cases, the porogen component is present in the build material in an amount of 55-75 wt. %, based on the total weight of the build material. In some such instances, the porogen component is present in the build material in amount of 55-70 wt. %, 55-65 wt. %, 55-60 wt. %, 60-80 wt. %, 60-75 wt. %, 60-70 wt. %, 60-65 wt. %, 65-80 wt. %, 65-75 wt. %, 65-70 wt. %, 70-80 wt. %, 70-75 wt. %, or 75-80 wt. %, based on the total weight of the build material.

Turning to other components of compositions or build materials, a composition or build material described herein comprises an acrylate component. Any acrylate component not inconsistent with the technical objectives of the present disclosure may be used. It is particularly to be observed that an "acrylate" component, for reference purposes herein, can comprise one or more chemical species comprising at least one acrylate, (meth)acrylate, acrylamide, or (meth)acrylamide moiety or functional group. Additionally, it is to be understood that the term "(meth)acrylate" includes acrylate or methacrylate or a mixture or combination thereof. Similarly, the term "(meth)acrylamide" can comprise a chemical species comprising at least one acrylamide or (meth)acrylamide moiety or functional group. In some cases, an acrylate component comprises a (meth)acrylate monomer, a (meth)acrylate oligomer, or a mixture thereof.

A (meth)acrylate monomer and/or a (meth)acrylate oligomer described herein can comprise a monofunctional, difunctional, trifunctional, tetrafunctional, pentafunctional, or higher functional acrylate species. A "monofunctional" acrylate species, for reference purposes herein, comprises a chemical species that includes one acrylate moiety. Similarly, a "difunctional" acrylate species comprises a chemical species that includes two acrylate moieties; a "trifunctional" acrylate species comprises a chemical species that includes three acrylate moieties; a "tetrafunctional" acrylate species comprises a chemical species that includes four acrylate moieties; and a "pentafunctional" curable species comprises a chemical species that includes five acrylate moieties. Thus, in some embodiments, a monofunctional acrylate component of a composition described herein comprises a mono(meth)acrylate, a difunctional acrylate component of a composition described herein comprises a di(meth)acrylate, a trifunctional acrylate component of a composition described herein comprises a tri(meth)acrylate, a tetrafunctional acrylate component of a composition described herein comprises a tetra(meth)acrylate, and a pentafunctional acrylate component of a composition described herein comprises

a penta(meth)acrylate. Other monofunctional, difunctional, trifunctional, tetrafunctional, and pentafunctional acrylate species may also be used.

Moreover, a monofunctional, difunctional, trifunctional, tetrafunctional, and pentafunctional (meth)acrylate, in some cases, can comprise a relatively low molecular weight species, i.e., a (meth)acrylate monomer (such as a species having a molecular weight below 300, below 200, or below 100), or a relatively high molecular weight species, i.e., a (meth) acrylate oligomer component (such as a species having a molecular weight (e.g., a weight average molecular weight in the case of a species having a molecular weight distribution) above 300, above 400, above 500, or above 600, and optionally below 10,000).

Additionally, in some embodiments, a (meth)acrylate monomer has a viscosity of 500 centipoise (cP) or less at 25°C, when measured according to ASTM D2983, while a (meth)acrylate oligomer has a viscosity of 1000 cP or more at 25°C, when measured according to ASTM D2983.

As stated above, build materials described herein can comprise a (meth)acrylate monomer (e.g., as part of the acrylate component). The (meth)acrylate monomer can comprise any (meth)acrylate monomer not inconsistent with the objectives of the present disclosure. In some cases, for instance, the (meth)acrylate monomer comprises one or more (meth)acrylates and/or one or more (meth)acrylamides. Moreover, in some embodiments described herein, the one or more (meth)acrylates and/or one or more (meth)acrylamides are hydrophilic or water soluble. A "water soluble" species or material, for reference purposes herein, has a solubility in water (or in an acidic or basic aqueous solution described further herein) of at least 1 gram per 1 liter of water (or of aqueous solution) at 25°C. In some cases, a water soluble species or material has a solubility of at least 5 g/L, at least 10 g/L, or at least 100 g/L at 25°C.

In some embodiments described herein, the (meth)acrylate monomer comprises hydrophilic or water soluble mono-, di-, and/or tri(meth)acrylate species. The (meth)acrylate monomer, for example, can comprise one or more of hydroxylalkyl(meth)acrylates (e.g., hydroxypropylacrylate), hydroxyalkyl(meth)acrylamides (e.g., N-hydroxyethylacrylamide), ethoxylated trimethylol propane triacrylate ("TAC" or trimethylolpropane ethoxylate triacrylate), acryloyl morpholine, and various combinations or mixtures thereof. In some embodiments, hydroxyalkyl(meth)acrylates include hydroxyethyl(meth)acrylate, hydroxypropyl(meth)acrylate, hydroxybutyl(meth)acrylate, and/or mixtures thereof.

The (meth)acrylate monomer of a build material described herein may also include a poly(ethylene glycol) diacrylate (PEGDA) component. With reference to the poly(ethylene glycol) diacrylate component as used herein, the PEGDA component can comprise a single poly(ethylene glycol) diacrylate species or multiple poly(ethylene glycol) diacrylate species of differing molecular weights. In some embodiments, species of the PEGDA component have a weight average molecular weight of 0.1 kiloDalton (kDa) to 20 kDa or 0.2 to 20 kDa.

Molecular weight of individual species of PEGDA, for example, can fall within one or more ranges set forth in Table 1.

Table 1. Poly(ethylene glycol) Diacrylate Molecular Weight (kDa).

| |
|---|
| 0.1-1 |
| 0.2-20 |
| 0.5-1 |
| 3-5 |
| 3-10 |
| 10-20 |
| 0.5-5 |

Any combination or mixture of poly(ethylene glycol) diacrylates of differing molecular weights is contemplated. In some cases, the PEGDA component comprises a mixture of two of more PEGDA species each having a weight average molecular weight from 0.5 to 5 kDa.

Additionally, in some cases, the (meth)acrylate monomer of a composition described herein comprises a cyclocarbonate (meth)acrylate monomer. In some such instances, the cyclocarbonate (meth)acrylate monomer has the structure of Formula I:

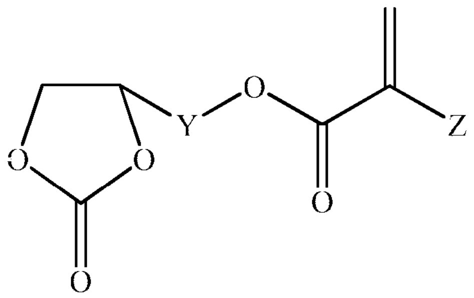

(Formula I),

wherein Y is a linear or branched C1-C6 alkylene moiety; and
wherein Z is H or CH.

For reference purposes herein, it is to be understood that a "Cn-Cm alkylene moiety" (e.g., a "C1-C4 alkylene moiety") is a bivalent saturated aliphatic radical having from "n" to "m" carbon atoms (e.g., 1 to 4 carbon atoms, and no more than 4 carbon atoms). In some preferred embodiments, Y is a linear or branched C1-C4 alkylene moiety, such as CH which is especially preferred. Additionally, in some embodiments, Z is H. Further, in some instances, Y is $CH_2$ and Z is H. Thus, in some cases, the cyclocarbonate (meth)acrylate monomer of a composition described herein has the structure of Formula II:

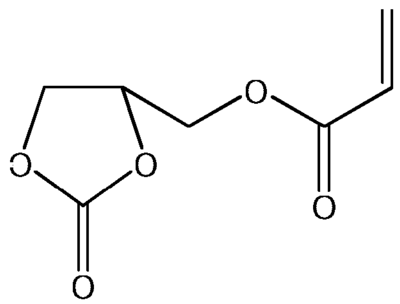

(Formula II).

It is to be understood that the (meth)acrylate monomer of a build material described herein can include a combination of monomeric species, such as a combination of the (meth)acrylate and/or (meth)acrylamide species described above. For example, in some cases, the (meth)acrylate monomer comprises one or more hydroxyalkyl(meth) acrylates, one or more poly(ethylene glycol) acrylates, one or more poly(ethylene glycol) diacrylates, one or more hydroxyalkyl(meth)acrylamides, one or more cyclocarbonate (meth)acrylates, or a combination of two or more of the foregoing. Thus, the present disclosure contemplates many combinations and compositions of (meth)acrylate monomers that can be included in example implementations, though they are not explicitly enumerated herein.

Build materials or compositions described herein, in some cases, also comprise a (meth)acrylate oligomer (e.g., as part of the acrylate component of the build material). Any (meth)acrylate oligomer species not inconsistent with the technical objectives of the present disclosure may be used. In some preferred embodiments, the (meth)acrylate oligomer comprises one or more hydrolysable oligomeric species. A "hydrolysable" oligomeric species, for reference purposes herein, includes at least one hydrolysable bond. In some cases, the hydrolysable bond is part of the repeating unit of the oligomer. For example, in some instances, a hydrolysable oligomeric species comprises one or more urethane bonds, one or more ester bonds, or one or more carbonate bonds in the backbone of the oligomeric species. As understood by one of ordinary skill in the art, such a bond may be hydrolyzed by water, including in a relatively facile manner when exposed to water or an aqueous solution described herein for a time period and at a temperature described herein.

Moreover, in some preferred embodiments, the (meth)acrylate oligomer can be bifunctional or higher functional, as well as being hydrolysable. Additionally, in some preferred embodiments, a majority of the total amount of the (meth) acrylate oligomer is bifunctional or higher functional. For example, in some cases, at least 60 wt. %, at least 70 wt. %, at least 80 wt. %, or at least 90 wt. % of the (meth)acrylate oligomer component is bifunctional or higher functional, where the foregoing weight percentages are based on the total amount of the (meth)acrylate oligomer component.

In some embodiments of a build material described herein, the (meth)acrylate oligomer material comprises a urethane acrylate oligomer, a urethane methacrylate oligomer, a polyether urethane oligomer, an aliphatic polyester urethane acrylate oligomer, or a combination of two or more of the foregoing. In some such embodiments, a urethane acrylate can comprise a polyether urethane acrylate or a polyurethane acrylate. In some instances, the polyether urethane acrylate can be monofunctional or difunctional. Additionally, in some cases, the (meth)acrylate oligomer can comprise an

aliphatic urethane diacrylate oligomer.

Some non-limiting examples of commercially available (meth)acrylate oligomers useful in some embodiments described herein include the following: monofunctional urethane acrylate, commercially available from RAHN USA under the trade name GENOMER 1122; an aliphatic urethane diacrylate, commercially available from ALLNEX under the trade name EBECRYL 8402; an aliphatic urethane diacrylate oligomer, commercially available from IGM Resins under the trade name PHOTOMER 6210; an aliphatic urethane diacrylate oligomer, commercially available from IGM Resins under the trade name PHOTOMER 6710; a multifunctional acrylate oligomer, commercially available from DYMAX Corporation under the trade name BR-952; aliphatic polyether urethane acrylate, commercially available from DYMAX Corporation under the trade name BR-371S, and polyether urethane methacrylate, commercially available from DYMAX Corporation under the trade name BR-541 MD. Other commercially available oligomeric curable materials may also be used.

Urethane (meth)acrylates suitable for use in build materials described herein, in some cases, can be prepared in a known manner, typically by reacting a hydroxyl-terminated urethane with acrylic acid or methacrylic acid to give the corresponding urethane (meth)acrylate, or by reacting an isocyanate-terminated prepolymer with hydroxyalkyl acrylates or methacrylates to give the urethane (meth)acrylate. Suitable processes are disclosed, inter alia, in EP-A 114 982 and EP-A 133 908. The weight average molecular weight of such (meth)acrylate oligomers, in some cases, can be from about 500 to 6,000. Urethane (meth)acrylates are also commercially available from SARTOMER under the product names CN980, CN981, CN975 and CN2901. In some embodiments, urethane acrylate oligomers are employed in build materials described herein. Suitable urethane acrylates can include difunctional aliphatic urethane acrylates from DYMAX Corporation under the trade designations BR-741 and BR-970. In some embodiments, a (meth)acrylate oligomer comprises aliphatic polyester urethane acrylate or aliphatic polyether urethane acrylate. Commercial examples of these oligomeric species are available from DYMAX Corporation under the trade designations BR-7432 and BR-543, respectively.

The acrylate component of a build material or composition described herein can be present in the build material or composition in any amount not inconsistent with the technical objectives of the present disclosure. In some embodiments, for example, the acrylate component can be present in an amount of 1-40 wt. %, 1-35 wt. %, 1-30 wt. %, 1-20 wt. %, 5-40 wt. %, 5-35 wt. %, 5-30 wt. %, 5-20 wt. %, 5-15 wt. %, 10-40 wt. %, 10-35 wt. %, 10-30 wt. %, 10-20 wt. %, 15-40 wt. %, 15-35 wt. %, 15-30 wt. %, 15-25 wt. %, 20-40 wt. %, 20-35 wt. %, 20-30 wt. %, 25-40 wt. %, or 25-35 wt. %, based on the total weight of the composition.

Build materials or compositions described herein also comprise a photoinitiator component for initiating polymerization of one or more components of the build material or composition upon exposure to light of the proper wavelength. Any photoinitiator not inconsistent with the objectives of the present disclosure may be used in a build material or composition described herein. In some embodiments, for example, the photoinitiator component comprises an alpha-cleavage type (unimolecular decomposition process) photoinitiator or a hydrogen abstraction photosensitizer-tertiary amine synergist, operable to absorb light between about 250 nm and about 400 nm, between about 250 nm and 405 nm, or between about 300 nm and about 385 nm, to yield free radical(s). Examples of alpha cleavage photoinitiators are Irgacure 184 (CAS 947-19-3), Irgacure 369 (CAS 119313-12-1), and Irgacure 819 (CAS 162881-26-7). An example of a photosensitizer-amine combination is Darocur BP (CAS 119-61-9) with diethylaminoethylmethacrylate.

In addition, in some instances, photoinitiators comprise benzoins, including benzoin, benzoin ethers, such as benzoin methyl ether, benzoin ethyl ether and benzoin isopropyl ether, benzoin phenyl ether and benzoin acetate, acetophenones, including acetophenone, 2,2-dimethoxyacetophenone and 1,1-dichloroacetophenone, benzil, benzil ketals, such as benzil dimethyl ketal and benzil diethyl ketal, anthraquinones, including 2-methylanthraquinone, 2-ethylanthraquinone, 2-tert-butylanthraquinone, 1-chloroanthraquinone and 2-amylanthraquinone, triphenylphosphine, benzoylphosphine oxides, such as 2,4,6-trimethylbenzoyldiphenylphosphine oxide (Lucirin TPO), benzophenones, such as benzophenone and 4,4'-bis(N,N'-dimethylamino)benzophenone, thioxanthones and xanthones, acridine derivatives, phenazine derivatives, quinoxaline derivatives or 1-phenyl-1,2-propanedione, 2-O-benzoyl oxime, 1-aminophenyl ketones or 1-hydroxyphenyl ketones, such as 1-hydroxycyclohexyl phenyl ketone, phenyl 1-hydroxyisopropyl ketone and 4-isopropylphenyl 1-hydroxyisopropyl ketone.

Suitable photoinitiators can also comprise photoinitiators operable for use with a HeCd laser radiation source, including acetophenones, 2,2-dialkoxybenzophenones and 1-hydroxyphenyl ketones, such as 1-hydroxycyclohexyl phenyl ketone or 2-hydroxyisopropyl phenyl ketone (=2-hydroxy-2,2-dimethylacetophenone). Additionally, in some cases, suitable photoinitiators comprise those operable for use with an Ar laser radiation source including benzil ketals, such as benzil dimethyl ketal. In some embodiments, a suitable photoinitiator comprises an $\alpha$-hydroxyphenyl ketone, benzil dimethyl ketal or 2,4,6-trimethylbenzoyldiphenylphosphine oxide or a mixture thereof.

Another class of photoinitiators that may be included in a composition described herein comprises ionic dye-counter ion compounds capable of absorbing actinic radiation and generating free radicals for polymerization initiation. In some embodiments, composition containing ionic dye-counter ion compounds can be polymerized upon exposure to visible light within the adjustable wavelength range of about 400 nm to about 700 nm. Ionic dye-counter ion compounds and their mode of operation are disclosed in EP-A-0 223 587 and U.S. Pat. Nos. 4,751,102; 4,772,530; and 4,772,541.

In some cases, a photoinitiator that may be included in a build material or composition described herein comprises a water-soluble pyrrolidone or phosphine oxide such as a monoacylphosphine oxide (MAPO) salt or bisacylphosphine oxide (BAPO) salt, which may in some instances be a sodium or lithium MAPO or BAPO salt. In some embodiments, a photoinitiator included in a build material or composition described herein has a structure of Formula III or Formula IV:

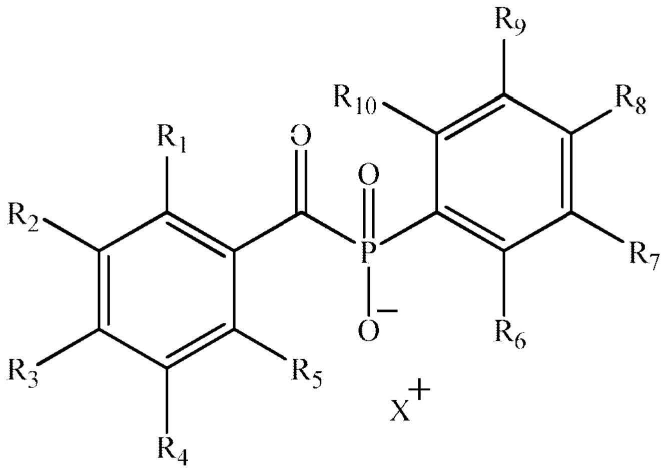

(Formula III),

and

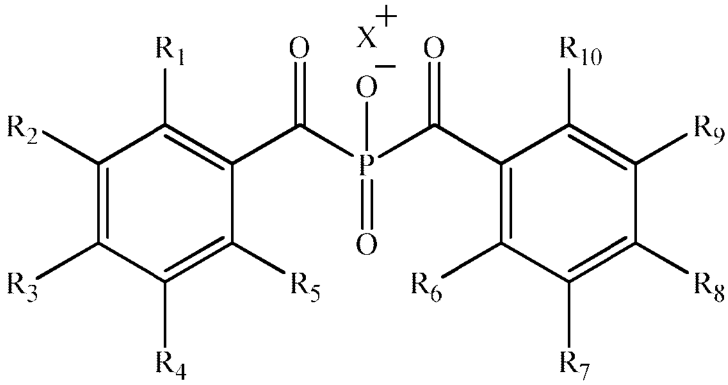

(Formula IV),

wherein X is Na or Li, and wherein each of R -$R_{10}$ is independently H, CH , or $CH_2CH_3$. For example, in some preferred embodiments, each of $R_1$, $R_3$, and R in Formula III is CH_, and each of $R_2$, $R_4$, $R_5$, $R_7$, $R_8$, $R_9$, and R is H. Such a species can be referred to herein as "NaP", "Na-TPO", "Sodium TPO", or "Sodium TPO-L" when X is Na, and as "LiP", "Li-TPO", "Lithium TPO", or "Lithium TPO-L" when X is Li. In other preferred embodiments, each of R $R_3$, $R_5$, $R_6$, $R_8$, and R in Formula IV is CH_, and each of R $R_4$, $R_7$, and R is H. Such a species can be referred to herein as BAPO-ONa when X is Na, and as BAPO-OLi when X is Li. It is further to be understood with reference to Formula III and Formula IV above that these structures also represent resonance structures, or structures in which (for drawing convenience) the P-O single bond and the P-O double bond "switch places" in the depiction of the structure (e.g., such that the P-O double bond points "up", rather than pointing "down" as depicted above).

A photoinitiator component can be present in a build material or composition described herein in any amount not inconsistent with the objectives of the present disclosure. In some embodiments, a photoinitiator component is present in a build material or composition in an amount of up to about 7 wt. %, up to about 5 wt. %, up to about 3 wt. %, or up to about 2 wt. %, based on the total weight of the build material or composition. In some cases, a photoinitiator is present in an amount of about 0.1-7 wt. %, 0.1-5 wt. %, 0.1-3 wt. %, 0.1-2 wt. %, 0.5-5 wt. %, 0.5-3 wt. %, 0.5-2 wt. %, 1-7 wt. %, 1-5 wt. %, or 1-3 wt. %, based on the total weight of the build material or composition.

It is further to be understood that the amounts (weight percents) described in the immediately preceding paragraph refer to photoinitiators that are non-oligomeric and non-polymeric. That is, the amounts described above refer to "monomeric" or "molecular" photoinitiators, which may, for instance, have a molecular weight of less than 400. However, it is also to be understood that oligomeric or polymeric photoinitiators may be used in compositions and methods described herein. But in such an instance (when an oligomeric or polymeric photoinitiator is used), then the amounts

(weight percents) above are to be calculated without taking into account the weight of the oligomeric or polymeric portion or moiety of the oligomeric or polymeric photoinitiator. In other words, to determine the overall amount (weight percent) of the oligomeric or polymeric photoinitiator that is present in the composition, the calculation (specifically, the numerator) should be based on only the molecular weight of the photoactive moiety of the photoinitiator, not on the molecular weight(s) of the remaining moieties or repeating units of the oligomeric or polymeric photoinitiator (for purposes of the present disclosure).

Build materials or compositions described herein, in some cases, can further comprise one or more photosensitizers. In general, such a sensitizer can be added to a build material to increase the effectiveness of one or more photoinitiators that may also be present. In some cases, a sensitizer comprises isopropylthioxanthone (ITX) or 2-chlorothioxanthone (CTX).

A sensitizer can be present in a composition in any amount not inconsistent with the technical objectives of the present disclosure. In some embodiments, a sensitizer is present in an amount ranging from about 0.1 wt. % to about 2 wt. % or from about 0.5 wt. % to about 1 wt. %, based on the total weight of the composition. However, in other cases, a composition described herein excludes a sensitizer such as described above.

Turning to another possible component of a build material or composition described herein, build materials or compositions described herein may also further comprise a colorant. Such a colorant of a build material described herein can be a particulate colorant, such as a particulate pigment, or a molecular colorant, such as a molecular dye. Any such particulate or molecular colorant not inconsistent with the technical objectives of the present disclosure may be used. In some cases, for instance, the colorant of a composition comprises an inorganic pigment, such as $TiO_2$ and/or ZnO. In some embodiments, the colorant of a composition comprises a colorant for use in a RGB, sRGB, CMY, CMYK, L*a*b*, or Pantone® colorization scheme. Moreover, in some cases, a particulate colorant described herein has an average particle size of less than about 5 μm, or less than about 1 μm. In some instances, a particulate colorant described herein has an average particle size of less than about 500 nm, such as an average particle size of less than about 400 nm, less than about 300 nm, less than about 250 nm, less than about 200 nm, or less than about 150 nm. In some instances, a particulate colorant has an average particle size of about 50-5000 nm, about 50-1000 nm, or about 50-500 nm.

A colorant can be present in a composition described herein in any amount not inconsistent with the technical objectives of the present disclosure. In some cases, colorant is present in the composition in an amount up to about 2 wt. %, or an amount of about 0.005-2 wt. %, 0.01-2 wt. %, 0.01-1.5 wt. %, 0.01-1 wt. %, 0.01-0.5 wt. %, 0.1-2 wt. %, 0.1-1 wt. %, 0.1-0.5 wt. %, or 0.5-1.5 wt. %, based on the total weight of the composition. In some embodiments, a composition described herein excludes colorant as described above.

Build materials or compositions described herein can be produced in any manner not inconsistent with the technical objectives of the present disclosure. In some embodiments, for instance, a method for the preparation of a composition described herein comprises the steps of mixing the components of the composition, optionally melting the mixture, and filtering the (optionally molten) mixture. In some cases, the components are mixed and optionally melted at a temperature between about 25°C and about 35°C, or at a temperature in the range of 25-55°C, 35-65°C, or 45-75°C. In some instances in which it is desirable or necessary to melt one or more solid components of the composition, mixing and/or melting can be carried about a temperature in a range from about 75°C to about 85°C. In some embodiments, a composition described herein is produced by placing all components of the composition in a reaction vessel, optionally heating the resulting mixture, and stirring the resulting mixture at a temperature between about 25°C and about 75°C or a temperature ranging from about 75°C to about 85°C. The stirring (and optionally the heating) are continued until the mixture attains a substantially homogenized liquid (or molten) state. In general, the liquid (or molten) mixture can be filtered while in a flowable state to remove any large undesirable particles that may interfere with jetting or extrusion or other printing process. The filtered mixture can then be cooled to ambient temperatures (if cooling is needed) and stored until ready for use in a 3D printing system.

## II. Methods of Forming a 3D Article by Additive Manufacturing

In another aspect, methods of forming or "printing" a 3D article or object by additive manufacturing are described herein. Methods of forming a 3D article or object described herein can include forming the 3D article from a plurality of layers of a composition described herein in a layer-by-layer manner. In such cases, the composition can be used as a build material. It is also possible, in some embodiments, to use a composition described herein as a support material. Methods of forming a 3D article by additive manufacturing can also include forming the object in a manner other than a layer-by-layer manner. Any composition described hereinabove in Section I may be used in a method described herein. For example, in some embodiments, a method described herein comprises providing a composition, wherein the composition comprises an acrylate component; a photoinitiator component; and a porogen component. In some such embodiments, the porogen component is water soluble. In some cases, the porogen component is present in the build material in an amount of 55-75 wt. %, based on the total weight of the build material.

In some instances, a method described herein comprises providing a build material comprising a composition described above, and selectively curing a portion of the build material using incident curing radiation having a Gaussian

distribution of wavelengths and a peak wavelength at the wavelength λ. Moreover, in some embodiments described herein, the build material is selectively cured according to a digital file or image of the desired article, such as according to preselected computer aided design (CAD) parameters. Moreover, in some cases, one or more layers of a build material described herein has a thickness of about 10 μm to about 100 μm, about 10 μm to about 80 μm, about 10 μm to about 50 μm, about 10 μm to about 40 μm, about 20 μm to about 100 μm, about 20 μm to about 80 μm, or about 20 μm to about 40 μm. Other thicknesses are also possible.

Performing a printing process described herein can provide a printed 3D article from a build material described herein that has a high feature resolution. The "feature resolution" of an article, for reference purposes herein, can be the smallest controllable physical feature size of the article or the pixel or voxel size of the printing process, where it is understood that "pixel" and "voxel" refer to the CAD parameter or other digital model of the article. In some embodiments, a printed article described herein has an average voxel size greater than 50 μm per side on average (e.g., when the average voxel size corresponds to a volume having an average length in all three dimensions of 50-100 μm, 50-75 μm, 60-100 μm, 60-80 μm, or 60-70 μm). In other cases, a printed article described herein has an average voxel size of less than 50 μm, less than 40 μm, less than 30 μm, or less than 20 μm per side on average (e.g., when the average voxel size corresponds to a volume having an average length in all three dimensions of 10-45 μm, 10-40 μm, 10-30 μm, 10-25 μm, 10-20 μm, 15-45 μm, or 15-40 μm).

Additionally, it is to be understood that methods of printing a 3D article described herein can include, for example, MJP, DLP, or SLA 3D printing methods. For example, in some instances, a MJP method of printing a 3D article comprises selectively depositing layers of a build material described herein in a fluid state onto a substrate, such as a build pad of a 3D printing system. In addition, in some embodiments, a method described herein further comprises supporting at least one of the layers of the build material with a support material. Any support material not inconsistent with the objectives of the present disclosure may be used.

A method described herein can also comprise curing the layers of the build material, including with curing radiation described above (such as curing radiation having a peak wavelength λ). Moreover, curing can comprise polymerizing one or more polymerizable moieties or functional groups of one or more components of the build material. In some cases, a layer of deposited build material is cured prior to the deposition of another or adjacent layer of build material. Additionally, curing one or more layers of deposited build material, in some embodiments, is carried out by exposing the one or more layers to electromagnetic radiation, such as UV light, visible light, or infrared light, as described above.

It should further be noted that a wavelength λ used to cure a material according to a method described herein can be any wavelength not inconsistent with the objectives of the present disclosure. For example, in some cases, λ is a wavelength in the ultraviolet (UV) or visible region of the electromagnetic spectrum. In some cases, the peak wavelength λ is in the infrared (IR) region of the electromagnetic spectrum. In some embodiments, the wavelength λ is between 250 nm and 400 nm, between 300 nm and 385 nm, or between 385 nm and 405 nm. In other cases, the wavelength λ is between 600 nm and 800 nm or between 900 nm and 1.3 μm. However, the precise wavelength λ is not particularly limited.

Moreover, it is to be understood that methods of printing a 3D article described herein can further comprise rinsing the formed (printed) 3D article. In some embodiments, the article may be rinsed with an aqueous solution, an alcohol, or mixture thereof. Any aqueous solution not inconsistent with the technical objectives of the present disclosure may be used. In some instances, pure water, deionized water, or sterile water may be used. In other embodiments, an aqueous buffered solution may be used. For example, phosphate-buffered saline (PBS), Dulbecco's phosphate buffered saline (DPBS), Hanks' balanced salt solution (HBSS), or Earle's balanced salt solution (EBSS) may be used, in some cases. Additionally, in some embodiments, any alcohol not inconsistent with the technical objectives of the present disclosure may be used. In some embodiments, isopropyl alcohol, methanol, or ethanol may be used.

Further details regarding various methods, including "material deposition" methods (such as MJP) or "vat polymerization" methods (such as SLA), are provided below.

### A. Material Deposition Methods

In a material deposition method, one or more layers of a build material described herein are selectively deposited onto a substrate and cured. Curing of the build material may occur after selective deposition of one layer, each layer, several layers, or all layers of the build material.

In some instances, a build material described herein (e.g., a composition described hereinabove in Section I) is selectively deposited in a fluid state onto a substrate, such as a build pad of a 3D printing system. Selective deposition may include, for example, depositing the build material according to preselected CAD parameters. For example, in some embodiments, a CAD file drawing corresponding to a desired 3D article to be printed is generated and sliced into a sufficient number of horizontal slices. Then, the build material is selectively deposited, layer by layer, according to the horizontal slices of the CAD file drawing to print the desired 3D article. A "sufficient" number of horizontal slices is the number necessary for successful printing of the desired 3D article, e.g., to produce it accurately and precisely.

Further, in some embodiments, a preselected amount of build material described herein is heated to the

appropriate temperature and jetted through a print head or a plurality of print heads of a suitable inkjet printer to form a layer on a print pad in a print chamber. In some cases, each layer of build material is deposited according to preselected CAD parameters or other preselected parameters based on a digital file, image, or model of the desired article. A suitable print head to deposit the build material, in some embodiments, is a piezoelectric print head. Additional suitable print heads for the deposition of build material and support material described herein are commercially available from a variety of ink jet printing apparatus manufacturers. For example, Xerox, Hewlett Packard, or Ricoh print heads may be used in some instances.

Additionally, in some embodiments, a build material described herein remains substantially fluid upon deposition. Alternatively, in other instances, the build material exhibits a phase change upon deposition and/or solidifies upon deposition. Moreover, in some cases, the temperature of the printing environment can be controlled so that the jetted droplets of build material solidify on contact with the receiving surface. In other embodiments, the jetted droplets of build material do not solidify on contact with the receiving surface, remaining in a substantially fluid state. Additionally, in some instances, after each layer is deposited, the deposited material is planarized and cured with electromagnetic (e.g., UV, visible, or infrared light) radiation prior to the deposition of the next layer. Optionally, several layers can be deposited before planarization and curing, or multiple layers can be deposited and cured followed by one or more layers being deposited and then planarized without curing. Planarization corrects the thickness of one or more layers prior to curing the material by evening the dispensed material to remove excess material and create a uniformly smooth exposed or flat up-facing surface on the support platform of the printer. In some embodiments, planarization is accomplished with a wiper device, such as a roller, which may be counter-rotating in one or more printing directions but not counter-rotating in one or more other printing directions. In some cases, the wiper device comprises a roller and a wiper that removes excess material from the roller. Further, in some instances, the wiper device is heated. It should be noted that the consistency of the jetted build material described herein prior to curing, in some embodiments, should desirably be sufficient to retain its shape and not be subject to excessive viscous drag from the planarizer.

Moreover, a support material, when used, can be deposited in a manner consistent with that described hereinabove for the build material. The support material, for example, can be deposited according to the preselected CAD parameters (or other parameters described herein) such that the support material is adjacent or continuous with one or more layers of the build material. Jetted droplets of the support material, in some embodiments, solidify or freeze on contact with the receiving surface. In some cases, the deposited support material is also subjected to planarization, curing, or planarization and curing. Any support material not inconsistent with the objectives of the present disclosure may be used.

Layered deposition of the build material and support material can be repeated until the 3D article has been formed. In some embodiments, a method of printing a 3D article further comprises removing the support material from the build material. The support material can be removed in any manner not inconsistent with the technical objectives of the present disclosure. In some cases, for instance, removing the support material comprises melting the support material. In some such embodiments, the support material has a melting point that is at least 20°C, at least 30°C, at least 40°C, at least 50°C, at least 70°C, or at least 100°C lower than a melting point, softening point, heat deflection temperature (HDT), or $T_g$ of the build material. In some such cases, the support material comprises or is formed from a wax. Moreover, in some preferred embodiments described herein, the support material is not removed by dissolving or dispersing the support material in water or using an aqueous solution described herein.

Curing of the build material may occur after selective deposition of one layer of build material, of each layer of build material, of several layers of build material, or of all layers of the build material necessary to print the desired 3D article. In some embodiments, a partial curing of the deposited build material is performed after selective deposition of one layer of build material, each layer of build material, several layers of build material, or all layers of the build material necessary to print the desired 3D article. A "partially cured" build material, for reference purposes herein, is one that can undergo further curing. For example, a partially cured build material is up to about 30% polymerized or cross-linked or up to about 50% polymerized or cross-linked. In some embodiments, a partially cured build material is up to about 60%, up to about 70%, up to about 80%, up to about 90%, or up to about 95% polymerized or cross-linked.

Partial curing of the deposited build material can include irradiating the build material with an electromagnetic radiation source or photocuring the build material (including with curing radiation described hereinabove). Any electromagnetic radiation source not inconsistent with the objectives of the present disclosure may be used, e.g., an electromagnetic radiation source that emits UV, visible or infrared light. For example, in some embodiments, the electromagnetic radiation source can be one that emits light having a wavelength from about 300 nm to about 900 nm, e.g., a Xe arc lamp.

Further, in some embodiments, a post-curing is performed after partially curing is performed. For example, in some cases, post-curing is carried out after selectively depositing all layers of the build material necessary to form a desired 3D article, after partially curing all layers of the build material, or after both of the foregoing steps have been performed. Moreover, in some embodiments, post-curing comprises photocuring, including with curing radiation described hereinabove having a peak wavelength $\lambda$. Again, any electromagnetic radiation source not inconsistent with the objectives of the present disclosure may be used for a post-curing step described herein. For example, in some

embodiments, the electromagnetic radiation source can be a light source that has a higher energy, a lower energy, or the same energy as the electromagnetic radiation source used for partial curing. In some cases wherein the electromagnetic radiation source used for post-curing has a higher energy (i.e., a shorter wavelength) than that used for partial curing, a Xe arc lamp can be used for partial curing and a Hg lamp can be used for post-curing.

Additionally, after post-curing, in some cases, the deposited layers of build material are at least about 80% polymerized or cross-linked or at least about 85% polymerized or cross-linked. In some embodiments, the deposited layers of build material are at least about 90%, at least about 95%, at least about 98%, or at least about 99% polymerized or cross-linked. In some instances, the deposited layers of build material are about 80-100%, about 80-99%, about 80-95%, about 85-100%, about 85-99%, about 85-95%, about 90-100%, or about 90-99% polymerized or cross-linked. The degree of polymerization or cross-linking can be determined using any protocol or method not inconsistent with the technical objectives of the present disclosure, such as by determining the percentage of monomers incorporated into the polymer network (e.g., based on molecular weight of the polymer compared to the molecular weight of the monomer, or based on the total polymer mass compared to the theoretical maximum of the total polymer mass) or by determining the amount of unincorporated monomers. When more than one method is used to determine a degree of polymerization or cross-linking, the results of the methods can be averaged to obtain a percentage described herein. It is further to be understood that the degree of polymerization or cross-linking described herein is different than "degree of polymerization" defined as the number of repeating units in a polymer molecule.

**B. Vat Polymerization Methods**

It is also possible to form a 3D article from a build material described herein using a vat polymerization method, such as an SLA or DLP method. Thus, in some cases, a method of printing a 3D article described herein comprises retaining a build material described herein in a fluid state in a container and selectively applying energy (particularly, for instance, the curing radiation having the peak wavelength $\lambda$) to the build material in the container to solidify at least a portion of a fluid layer of the build material, thereby forming a solidified layer that defines a cross-section of the 3D article. Additionally, a method described herein can further comprise raising or lowering the solidified layer of build material to provide a new or second fluid layer of unsolidified build material at the surface of the fluid build material in the container, followed by again selectively applying energy (e.g., the curing radiation) to the build material in the container to solidify at least a portion of the new or second fluid layer of the build material to form a second solidified layer that defines a second cross-section of the 3D article. Further, the first and second cross-sections of the 3D article can be bonded or adhered to one another in the z-direction (or build direction corresponding to the direction of raising or lowering recited above) by the application of the energy for solidifying the build material. Moreover, in some instances, the electromagnetic radiation has an average wavelength of 300-900 nm, and in other embodiments the electromagnetic radiation has an average wavelength that is less than 300 nm. In some cases, the curing radiation is provided by a computer controlled laser beam, DLP light source, or other light source. In addition, in some cases, raising or lowering a solidified layer of build material is carried out using an elevator platform disposed in the container of fluid build material. A method described herein can also comprise planarizing a new layer of fluid build material provided by raising or lowering an elevator platform. Such planarization can be carried out, in some cases, by a wiper or roller.

It is further to be understood that the foregoing process can be repeated a desired number of times to provide the 3D article. For example, in some cases, this process can be repeated "n" number of times, wherein n can be up to about 100,000, up to about 50,000, up to about 10,000, up to about 5000, up to about 1000, or up to about 500. Thus, in some embodiments, a method of printing a 3D article described herein can comprise selectively applying energy (e.g., curing radiation of peak wavelength $\lambda$) to a build material in a container to solidify at least a portion of an nth fluid layer of the build material, thereby forming an nth solidified layer that defines an nth cross-section of the 3D article, raising or lowering the nth solidified layer of build material to provide an (n+1)th layer of unsolidified build material at the surface of the fluid build material in the container, selectively applying energy to the (n+1)th layer of build material in the container to solidify at least a portion of the (n+1)th layer of the build material to form an (n+1)th solidified layer that defines an (n+1)th cross-section of the 3D article, raising or lowering the (n+1)th solidified layer of build material to provide an (n+2)th layer of unsolidified build material at the surface of the fluid build material in the container, and continuing to repeat the foregoing steps to form the 3D article. Further, it is to be understood that one or more steps of a method described herein, such as a step of selectively applying energy (e.g., curing radiation described herein) to a layer of build material, can be carried out according to an image of the 3D article in a computer-readable format. General methods of 3D printing using stereolithography are further described, inter alia, in U.S. Patents 5,904,889 and 6,558,606.

In a vat polymerization method such as described above, the build material may be partially cured as described in Section IIA above. For example, in some embodiments, selectively applying energy to the build material in the container to solidify at least a portion of a fluid layer of the build material may include partially curing at least a portion of a fluid layer of the build material. In other embodiments, partial curing of at least a portion of a fluid layer of the build material may occur after a first layer of the build material is provided and solidified, before or after a second layer of the build material is provided or

solidified, or before or after one, several, or all subsequent layers of the build material are provided or solidified.

Additionally, in some embodiments of a vat polymerization method described herein, after partial curing or after the desired 3D article is formed, post-curing as described in Section IIA above may be performed. The desired 3D article may be, for example, an article that corresponds to the design in a CAD file or other digital file, image, or model corresponding to the desired 3D article.

**III. Printed Articles**

In another aspect, printed 3D articles are described herein. In some embodiments, a printed 3D article is formed from a composition or build material described herein and/or using a method of additive manufacturing described herein. Any composition described hereinabove in Section I may be used. For example, in some cases, the composition comprising an acrylate component; a photoinitiator component; and a porogen component. Further, in some such cases, the porogen component is water soluble. Similarly, any method described hereinabove in Section II may be used to form an article according to the present disclosure.

Articles printed according to methods described herein can have a high water permeability. In some embodiments, the article has a water permeability between $10^{-17}$ and $10^{-14}$ $m^2$. In some such instances, the article has a water permeability between $10^{-16}$ and $10^{-14}$ $m^2$. In other instances, the article has a water permeability between $10^{-16}$ and $10^{-15}$ $m^2$. In still other embodiments, the article has a water permeability between $10^{-15}$ and $10^{-14}$ $m^2$.

To assess the water permeability of the printed article, a Franz cell is used. A non-limiting example of a Franz cell is shown in Figure 1A and Figure 1B. Non-limiting examples of experimental set-ups for measuring the water permeability of an article using a Franz cell are shown in Figure 2 and Figure 3.

With reference to Figures 1A, 1B, 2, and 3, a Franz cell (10) is maintained at 37°C by an incubator (not shown). The printed article (200) is used in place of the usual membrane in the Franz cell. The article (200) tested is typically 0.46 mm to 0.63, or 0.5 mm to 1 mm in thickness. However, in some embodiments, material as thin as 0.01 mm or as thick as to 1.3 mm may be tested. Material thicker than 1.3 mm may also be assessed. The Franz cell (10) includes a donor chamber (110) and a receptor chamber (111), as well as a sampling arm or port (116). Additionally, flat flanges (112) associated with the donor chamber (110) and receptor chamber

(111) can form a joint, with the printed article (200) disposed between the flanges (112), as illustrated in Figure 1B. A clamp (120) can be used to clamp the donor chamber (110) and receptor chamber (111) together via the flanges (112). The clamp (120) is illustrated in Figure 2 and Figure 3, but is not illustrated in Figure 1A or 1B, for purposes of clarity. Figure 1A shows the Franz cell (10) in an exploded view. Figure 1B shows the Franz cell (10) in an assembled or non-exploded view.

The experimental set-up also includes a pneumatic pump (not shown) to apply pressure to the donor chamber (110) of the Franz cell (10). Pressure is applied in the direction illustrated by the arrow (100) in Figures 1 and 2. The pneumatic pump is typically set at 30 mm Hg or 60 mm Hg. Water is applied to the donor chamber (110), such as from a reservoir (300). A camera (320) is used to monitor the movement and flow of the water through the article (200) and into the receptor chamber (111) over the course of time. Changes in the water height of the donor chamber (110) are also measured. The experiment may last between 2 and 24 hours or until all the water applied to the donor chamber (110) has moved through the article (200) into the receptor chamber (111). The flow rate of the water that is transported through the membrane (the printed article (200)) is determined by measuring the distance the water moves in the receptor chamber (111) over time, based on movement of the water level (118) in the sampling port (116), such as indicated by a ruler (240). The pressure of the set-up is also monitored, such as by using a pressure sensor (310) connected to the Franz cell (10) using a hose and/or connector (312). Based on measurements taken, permeability (k) can be calculated using Darcy's Law using the formula:

$$k = \frac{Q\,L\,\mu}{A\,h}$$

wherein Q is the flow rate of the water that is transported through the printed article, L is the thickness of the article (e.g., in a z-direction), $\mu$ is the dynamic viscosity of the water flowing through the article, A is the cross-sectional area of the article (e.g., in an xy-plane) across which water is flowing, and h is the pressure drop that occurs.

Articles printed according to methods described herein can find applications in a variety of fields, including the medical field. The articles, for examples, can be medical implants.

EXAMPLES

Some specific embodiments of build materials (or inks or polymerizable liquids), methods, and articles are further

illustrated in the following non-limiting Examples.

Table 2 provides formulations of build materials prepared according to some embodiments described herein, specifically Examples 1-3. In Table 2, "Ex." means "Example," and the amounts listed for a given Example composition are weight percents, based on the total weight of the composition of that Example. It is to be understood that all components of a given Example composition add up to 100 weight percent. "PI" means "Photoinitiator," and "PS" means "Photosensitizer." Table 3 provides components of Examples 1-3. Table 4 provides water permeability information for the article printed from such compositions, measured as described above. Additionally, in Table 3, "QY" refers to quinoline yellow, "PGME" refers to propylene glycol methyl ether, and "TGME" refers to tripropylene glycol methyl ether. Further, in Table 3, "EPA" refers to ethoxylated o-phenylphenol acrylate, and "TDD" refers to tricyclodecane dimethanol diacrylate.

Table 2. Compositions for Examples 1-3.

| Component | **Ex. 1** | **Ex. 2** | **Ex. 3** |
|---|---|---|---|
| Acrylate Component | 33.45 | 23.95 | 23.95 |
| PI Component | 1.5 | 1 | 1 |
| Porogen Component | 65 | 75 | 75 |
| Colorant | 0.05 | 0.05 | 0.05 |
| PS | - | - | - |

Table 3. Components for Examples 1-3.

| Component | **Ex. 1** | **Ex. 2** | **Ex. 3** |
|---|---|---|---|
| Acrylate Component | TDD + EPA + penta(meth) acrylate + polyether urethane acrylate | TDD + EPA + penta(meth) acrylate + polyether urethane acrylate | TDD + EPA + penta(meth) acrylate + polyurethan e acrylate |
| PI Component | Na TPO-L | Na TPO-L | Na TPO-L |
| Porogen Component | PGME | PGME | PGME |
| Colorant | QY | QY | QY |
| PS | - | - | - |

Table 4. Water Permeability Measurements of Example Compositions 1-3.

| Composition | Water Permeability ($m^2$) |
|---|---|
| **Example 1** | $1 \times 10^{-16}$ |
| **Example 2** | $2 \times 10^{-15}$ |
| **Example 3** | $4 \times 10^{-16}$ |

Table 5 provides additional formulations of build materials according to some embodiments described herein, specifically Examples 4-6. Table 6 provides components of Examples 4-6. The same abbreviations indicated for Tables 2 and 3 also apply to Table 5 and Table 6.

Table 5. Compositions for Examples 4-6.

| Component | **Ex. 4** | **Ex. 5** | **Ex. 6** |
|---|---|---|---|
| Acrylate Component | 35 | 33.45 | 23.95 |
| PI Component | 1.5 | 1.5 | 1 |
| Porogen Component | 60 | 65 | 75 |
| Colorant | 2 | 0.05 | 0.05 |
| PS | 1.5 | - | - |

Table 6. Components for Examples 4-6.

| Component | **Ex. 4** | **Ex. 5** | **Ex. 6** |
|---|---|---|---|
| Acrylate Component | TDD + EPA + penta(meth) acrylate + polyether | TDD + EPA + penta(meth) acrylate + polyether | TDD + EPA + penta(meth) acrylate + |
| | urethane acrylate | urethane acrylate | polyurethan e acrylate |
| PI Component | Na TPO-L | Na TPO-L | Na TPO-L |
| Porogen Component | PGME | TGME | TGME |
| Colorant | QY | QY | QY |
| PS | CTX | - | - |

Some additional non-limiting example Embodiments are as follows.

Embodiment 1. A build material comprising:

an acrylate component;
a photoinitiator component; and
a porogen component;
wherein the porogen component is water soluble, and
wherein the porogen component is present in the build material in an amount of 55-75 wt. %, based on the total weight of the build material.

Embodiment 2. The build material of Embodiment 1, wherein the porogen component is miscible in water at 20°C.

Embodiment 3. The build material of Embodiment 1, wherein the porogen component has a solubility between 20% and 100% in water at 20°C.

Embodiment 4. The build material of Embodiment 1, wherein the porogen component has a solubility in water of at least 150 g/L at 20°C.

Embodiment 5. The build material of any of the preceding Embodiments, wherein the surface tension of the porogen component is between 25 and 30 dynes/cm at 25°C, when measured according to ASTM D1331-20.

Embodiment 6. The build material of Embodiment 1, wherein the porogen component has a Hansen solubility parameter $\delta_d$ between 14 and 17 $(J/cm^3)^{1/2}$, a Hansen solubility parameter $\delta_p$ between 2 and 8 $(J/cm^3)^{1/2}$, and a Hansen solubility parameter $\delta_h$ between 10 and 15 $(J/cm^3)^{1/2}$.

Embodiment 7. The build material of any of the preceding Embodiments, wherein the porogen component comprises a glycol ether.

Embodiment 8. The build material of Embodiment 7, wherein the glycol ether comprises propylene glycol methyl ether or tripropylene glycol methyl ether.

Embodiment 9. The build material of any of the preceding Embodiments, wherein the acrylate component comprises a urethane acrylate.

Embodiment 10. The build material of Embodiment 9, wherein the urethane acrylate comprises a polyether urethane acrylate.

Embodiment 11. The build material of Embodiment 9, wherein the urethane acrylate comprises a polyurethane acrylate.

Embodiment 12. The build material of any of the preceding Embodiments, wherein the acrylate component is present in the build material in an amount of 20-40 wt. %, based on the total weight of the build material.

Embodiment 13. The build material of any of the preceding Embodiments, wherein the photoinitiator component is present in the build material in an amount of 0.5-2 wt. %, based on the total weight of the build material.

Embodiment 14. The build material of any of the preceding Embodiments, wherein the photoinitiator component comprises a benzoylphosphine oxide.

Embodiment 15. The build material of any of the preceding Embodiments, wherein the build material further comprises a colorant.

Embodiment 16. A method of forming a three-dimensional article by additive manufacturing, the method comprising:

providing the build material of any of Embodiments 1-15; and
printing and curing the build material to form a printed three-dimensional article.

Embodiment 17. The method of Embodiment 16, wherein the build material is provided in a layer-by-layer process.

Embodiment 18. The method of Embodiment 16 or Embodiment 17, wherein the method further comprises rinsing the printed three-dimensional article with an aqueous solution.

Embodiment 19. A printed three-dimensional article formed from the build material of any of Embodiments 1-15.

Embodiment 20. The article of Embodiment 19, wherein the article has a water permeability between $10^{-17}$ and $10^{-14}$ $m^2$.

Embodiment 21. The article of Embodiment 20, wherein the article has a water permeability between $10^{-16}$ and $10^{-14}$ $m^2$.

Embodiment 22. The article of Embodiment 19, 20, or 21, wherein the article is a medical implant.

All patent documents referred to herein are incorporated by reference in their entireties. Various embodiments of the invention have been described in fulfillment of the various objectives of the invention. It should be recognized that these embodiments are merely illustrative of the principles of the present invention. Numerous modifications and adaptations thereof will be readily apparent to those skilled in the art without departing from the spirit and scope of the invention.

## Claims

**1.** A build material comprising:

an acrylate component;
a photoinitiator component; and
a porogen component;
wherein the porogen component is water soluble, and
wherein the porogen component is present in the build material in an amount of 55-75 wt. %, based on the total weight of the build material.

**2.** The build material of claim 1, wherein the porogen component is miscible in water at 20°C and/or wherein the porogen component has a solubility between 20% and 100% in water at 20°C.

**3.** The build material of claim 1 or 2, wherein the porogen component has a solubility in water of at least 150 g/L at 20°C and/or wherein the surface tension of the porogen component is between 25 and 30 dynes/cm at 25°C, when measured according to ASTM D1331-20.

**4.** The build material of one or more of claims 1 to 3, wherein the porogen component has a Hansen solubility parameter $\delta_d$ between 14 and 17 $(J/cm^3)^{1/2}$, a Hansen solubility parameter $\delta_p$ between 2 and 8 $(J/cm^3)^{1/2}$, and a Hansen solubility parameter $\delta_h$ between 10 and 15 $(J/cm^3)^{1/2}$ .

**5.** The build material of claim 1, wherein the porogen component comprises a glycol ether, preferably wherein the glycol ether comprises propylene glycol methyl ether or tripropylene glycol methyl ether.

**6.** The build material of one or more of claims 1 to 5, wherein the acrylate component comprises a urethane acrylate, preferably, wherein the urethane acrylate comprises a polyether urethane acrylate.

**7.** The build material of claim 6, wherein the urethane acrylate comprises a polyurethane acrylate.

**8.** The build material of one or more of claims 1 to 7, wherein the acrylate component is present in the build material in an amount of 20-40 wt. %, based on the total weight of the build material.

**9.** The build material of one or more of claims 1 to 8, wherein the photoinitiator component is present in the build material in an amount of 0.5-2 wt. %, based on the total weight of the build material.

**10.** The build material of one or more of claims 1 to 8, wherein the photoinitiator component comprises a benzoylphosphine oxide.

**11.** The build material of one or more of claims 1 to 7, wherein the build material further comprises a colorant.

**12.** A method of forming a three-dimensional article by additive manufacturing, the method comprising:

providing the build material of one or more of claims 1 to 11; and
printing and curing the build material to form a printed three-dimensional article.

**13.** The method of claim 12, wherein the build material is provided in a layer-by-layer process, preferably wherein the method further comprises rinsing the printed three-dimensional article with an aqueous solution.

**14.** A printed three-dimensional article formed from the build material of one or more of claims 1 to 11.

**15.** The article of claim 14, wherein the article has a water permeability between $10^{-17}$ and $10^{-14}$ $m^2$.

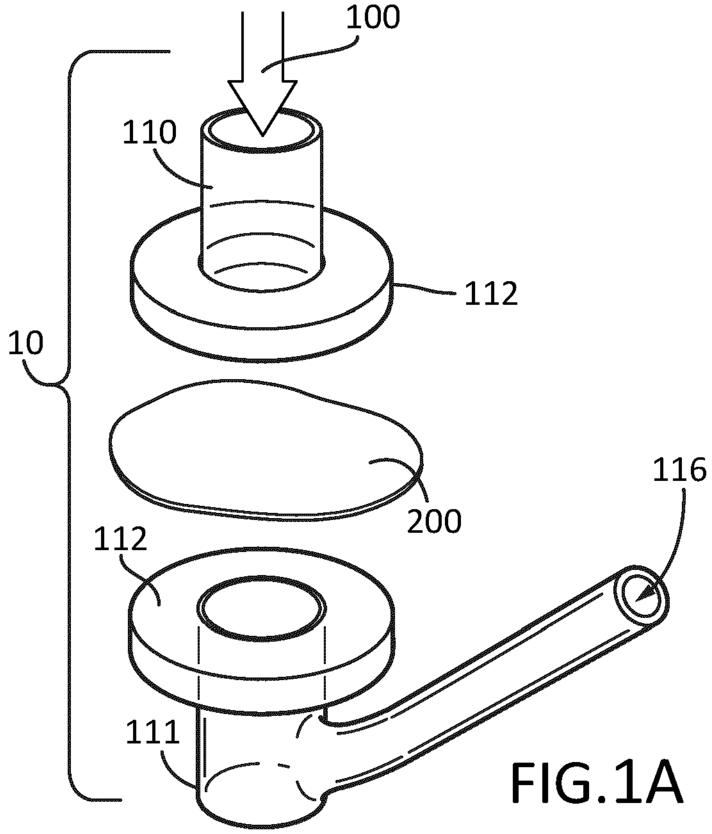


FIG.1A

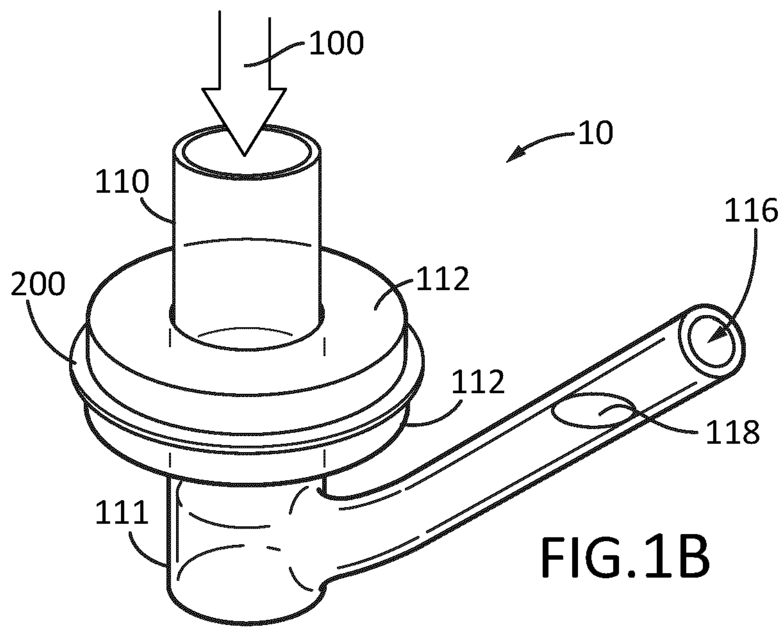


FIG.1B

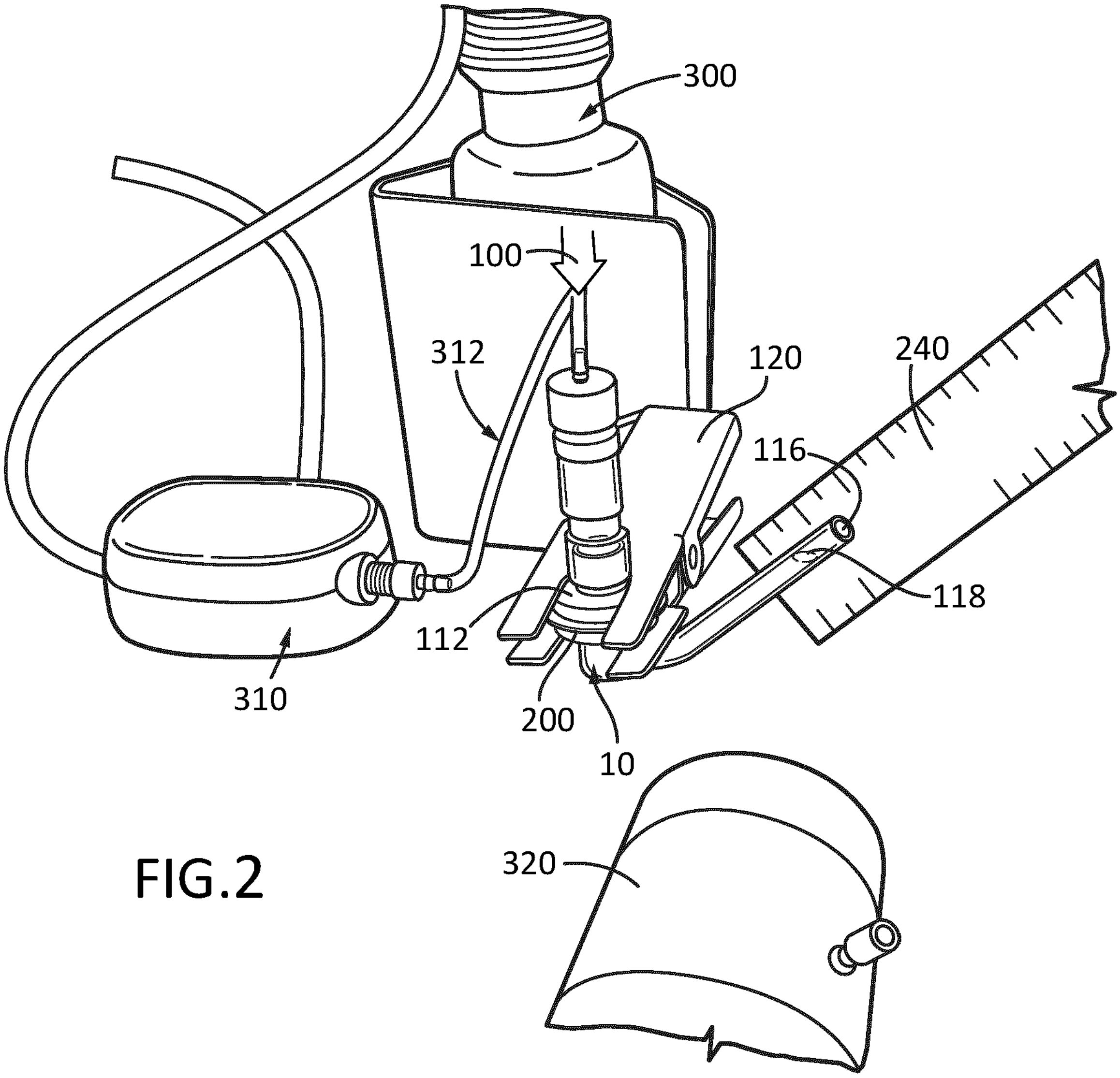


FIG.2

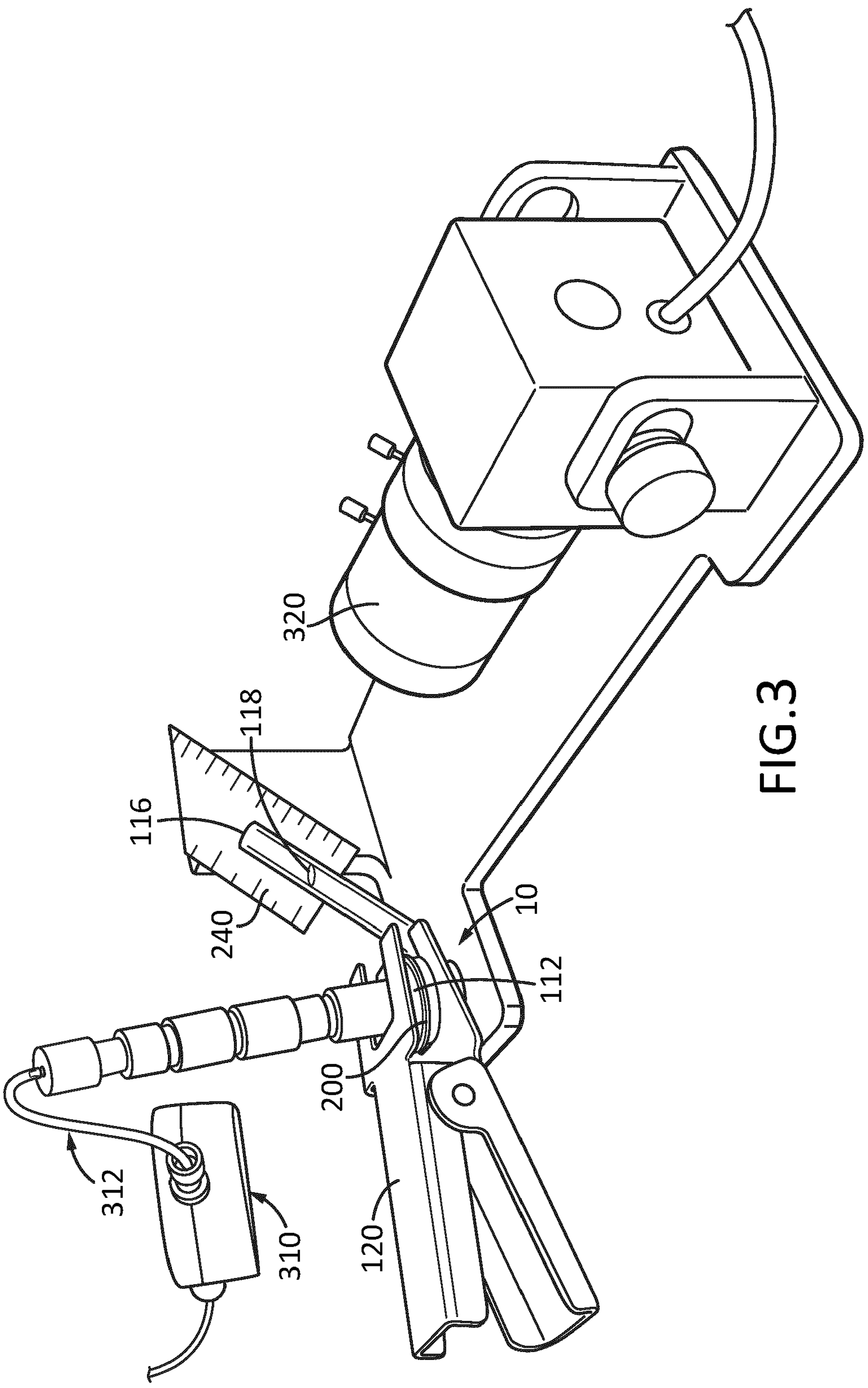


FIG.3

Europäisches Patentamt
European Patent Office
Office européen des brevets

# EUROPEAN SEARCH REPORT

Application Number
EP 25 17 0027

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 047 056 A1 (ZHUHAI SAILNER 3D TECH CO LTD [CN]) 24 August 2022 (2022-08-24)<br>* paragraph [0033] - paragraph [0034]; examples *<br>----- | 1-15 | INV.<br>C09D11/101<br>B33Y70/00<br>C09D11/38<br>C09D11/033<br>C09D11/36 |
| X | JP 7 398299 B2 (NIPPON CATALYTIC CHEM IND) 14 December 2023 (2023-12-14)<br>* examples *<br>----- | 1-15 | |
| X | US 2020/338834 A1 (SHPAYZER ELENA [IL] ET AL) 29 October 2020 (2020-10-29)<br>* paragraph [0205]; examples *<br>----- | 1-15 | |
| | | | TECHNICAL FIELDS SEARCHED (IPC) |
| | | | C09D<br>B33Y |

The present search report has been drawn up for all claims

1

| Place of search | Date of completion of the search | Examiner |
|---|---|---|
| Munich | 27 August 2025 | Schmitz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 17 0027

This annex lists the patent family members relating to the patent documents cited in the above-mentioned European search report. The members are as contained in the European Patent Office EDP file on The European Patent Office is in no way liable for these particulars which are merely given for the purpose of information.

27-08-2025

| Patent document cited in search report | Publication date | Patent family member(s) | Publication date |
|---|---|---|---|
| EP 4047056 A1 | 24-08-2022 | CN 111004491 A | 14-04-2020 |
| | | EP 4047056 A1 | 24-08-2022 |
| | | JP 7307276 B2 | 11-07-2023 |
| | | JP 2023502711 A | 25-01-2023 |
| | | WO 2021120809 A1 | 24-06-2021 |
| JP 7398299 B2 | 14-12-2023 | JP 7398299 B2 | 14-12-2023 |
| | | JP 2021146524 A | 27-09-2021 |
| US 2020338834 A1 | 29-10-2020 | CN 112041166 A | 04-12-2020 |
| | | EP 3732045 A1 | 04-11-2020 |
| | | IL 275770 A | 31-08-2020 |
| | | JP 7319280 B2 | 01-08-2023 |
| | | JP 2021509371 A | 25-03-2021 |
| | | US 2020338834 A1 | 29-10-2020 |
| | | WO 2019130321 A1 | 04-07-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63633255
- EP 114982 A
- EP 133908 A
- EP 0223587 A
- US 4751102 A
- US 4772530 A
- US 4772541 A
- US 5904889 A
- US 6558606 B

### Non-patent literature cited in the description

- *CHEMICAL ABSTRACTS*, 947-19-3
- *CHEMICAL ABSTRACTS*, 119313-12-1
- *CHEMICAL ABSTRACTS*, 162881-26-7
- *CHEMICAL ABSTRACTS*, 119-61-9